# EUROPEAN PATENT SPECIFICATION

(11) **EP 2 448 260 B1**
(45) Date of publication and mention of the grant of the patent: **16.09.2015**
(21) Application number: 09847993.4
(22) Date of filing: 21.12.2009
(51) Int. Cl.: H04L 29/06, H04L 29/08, H04N 7/173, H04N 21/239

(54) **CONTENT UPLOAD METHOD AND CONTENT DELIVERY FUNCTION ENTITY**
VERFAHREN ZUM HOCHLADEN VON INHALTEN UND FUNKTIONSEINHEIT FÜR DIE BEREITSTELLUNG VON INHALTEN
PROCÉDÉ DE TÉLÉCHARGEMENT DE CONTENU VERS L'AMONT ET ENTITÉ DE FONCTION DE LIVRAISON DE CONTENU

(30) Priority: 06.08.2009 CN 200910164196
(43) Date of publication of application: 02.05.2012
(73) Proprietor: ZTE Corporation, Shenzhen, Guangdong 518057 (CN)
(72) Inventor: XIA, Hongfei, Shenzhen Guangdong 518057 (CN)
(74) Representative: Tischner, Oliver
(86) International application number: PCT/CN2009/075788
(87) International publication number: WO 2011/015015

(56) References cited:
- WO-A1-2009/074070
- WO-A1-2009/092248
- WO-A2-2008/057653
- CN-A- 101 453 477
- CN-A- 101 483 660
- US-A1- 2009 119 410
- HONGFEI XIA ZTE CORPORATION P R CHINA: "Draft Recommendation: Content Delivery Architecture in NGN;xx (WP 3/13)", ITU-T DRAFT ; STUDY PERIOD 2009-2012, INTERNATIONAL TELECOMMUNICATION UNION, GENEVA ; CH, vol. 5/13, 13 September 2010 (2010-09-13), pages 1-47, XP017440391, [retrieved on 2010-09-13]

## Description

### TECHNICAL FIELD

The present disclosure relates to the field of mobile communications, in particular to a method for uplinking contents and a content delivery function entity.

### BACKGROUND

An interactive network television, also called an Internet Protocol TeleVision (IPTV), is a generic term for equipment providing services to users through an IP bearer network, such as live broadcasting, program on demand and time-shifted broadcasting of television programs supporting interaction capability. With the development of the IPTV, the number of its user is increased continuously, thus it presents a higher requirement on system performance and reliability, etc. For the content delivery function of the interactive network, in order to decrease the interaction among different parts of a system, it is required that the internal modules of a content interactive network are endowed with clear functions and responsibilities, and the content delivery and service process are brief and reliable.

At present, the IPTV standard is dominated by two architectures: IP Multimedia Subsystem (IMS) of a Next Generation Network (NGN) and non-IMS of the NGN, which can provide program on demand, live broadcasting, video recording, and some new services for the users.

Content Delivery Network (CDN) in the IPTV architecture plays an important role in the guarantee of quality of experience (QoE) and system stability in the IPTV system. Each important function entity in the CDN is mainly used to realize the functions of content location technology, scheduling and storage.

Currently, only the services of content provided by the service provider to the users are involved in the content delivery network, rather than services needing to be uploaded in real time such as user-generated contents. These services need the guarantee of QoS (quality of service)/QoE as well. However, in the current CDN, the guarantee of the QoS/QoE has not been provided to content uploading/upstreaming based on the user-generated contents.

WO 2009/092248 A1 discloses a content delivery device and system, content-on-demand method and network architecture. The content delivery device realizes content delivery function in next generation network. The next generation network includes a transmission stratum including a transmission functions entity and a service stratum including a service control functions entity. The content delivery device is located at the service stratum on top of the transmission stratum, is connected between the service control functions entity and transmission functions entity, and is used to deliver the content from application functions module of next generation network to a terminal user. Various service systems of IPTV etc. can be amalgamated with next generation network. Various multimedia services of next generation network are developed expediently and vacancy of the related technology is filled up.

According to WO 2009/074070 A1, a method for uploading the real-time media content in the IMS network includes that: the content transmitting unit receives the content uploading request message, wherein the content uploading request message indication information is carried by the content uploading request message; the content transmitting unit creates the content uploading session with a service control unit according to the received content uploading request message, and sends the real-time media content, wherein the content transmitting unit is the terminal of the IMS network, the service control unit is the application server or the call session control function entity. After receiving the content uploading request message, the content transmitting unit creates the content uploading session according to the content uploading request message indication in the received content uploading request message, and performs the real-time media content uploading process. The real-time media content uploading is implemented, and the IMS network could provide the service that the user provides real-time media content such as video monitoring, content sharing and so on.

### SUMMARY

In view of this, the present disclosure provides a method for uplinking contents and a content delivery function entity, so as to solve the problem that the content delivery network in the next generation network does not support the QoS of user-generated contents in the prior art.

According to one aspect of the present disclosure, the present disclosure provides a method for uplinking contents, which is used for uploading contents or uplinking a media stream generated by a user equipment (UE) to one or more CDN nodes of the CDN.

According to the present disclosure, the method for uplinking contents comprises the following steps: after receiving a session initiation request for uploading contents or uplinking a media stream, allocating by a CDN control function entity one or more CDN nodes, and sending a session request to a cluster control function entity of the CDN node; selecting, by the cluster control function entity which receives the session request, a content delivery function entity, establishing a session for uploading the contents or uplinking the media stream between itself and the selected content delivery function entity, and returning session acknowledgement information to the CDN control function entity; and returning, by the CDN control function entity, the received acknowledgement information to a user equipment; uploading the contents or uplinking the media stream according to the acknowledgement information by the user equipment to each content delivery function entity selected by the cluster control function entity.

According to the present disclosure, it also provides a content delivery network.

The content delivery network, according to the present disclosure, comprises a CDN control function entity and one or more CDN nodes. The CDN control function entity comprises a first receiving module, a first selecting module and a first transmitting module. The first receiving module is used for receiving a session initiation request from the user equipment for uploading contents or uplinking a media stream; the first selecting module is used for allocating one or more CDN nodes according to load information of one or more CDN nodes and/or region information contained in the session initiation request; the first transmitting module is used for sending a session request to a cluster control function entity of the CDN node allocated by the first selecting module. Each CDN node comprises a cluster control function entity and at least a content delivery function entity. The cluster control function entity comprises a second receiving module, a second selecting module, a session establishing module and a second transmitting module. The second receiving module is used for receiving the session request sent by the CDN control function entity; the second selecting module is used for selecting a content delivery function entity according to load status information of each content delivery functionentity in the CDN node where the cluster control function entity locates; the session establishing module is used for establishing a session between the cluster control function entity and the content delivery function entity selected by the second selecting module; the second transmitting module is used for sending attribute information of the session established by the session establishing module to the user equipment. The content delivery functiona entity is used for receiving a media file uploaded or a media stream uplinked by the user equipment.

Through at least one of the above technical solutions of the present disclosure, by means of that the CDN control function entity selects a CDN node for saving the contents uplinked by user equipment, and by means of establishing a session for uploading the contents or uplinking the media stream between the cluster control function entity and the content delivery function entity inside the CDN node, user-equipment-generated contents can be uploaded or user-equipment-generated media stream can be uplinked to the content delivery function entity of the CDN node, so that the content delivery network in the next generation network can support user-generated contents.

Additional features and advantages of the present disclosure will be set forth in the description which follows, and in part will be apparent from the description, or may be learned by practice of the present disclosure. The purposes and additional advantages of the present disclosure can be realized and acquired through the written description, claims and structure specifically indicated in the figures.

### BRIEF DESCRIPTION OF THE DRAWINGS

Fig. 1 is a diagram illustrating a structure of an NGN-based IPTV system according to an embodiment of the present disclosure;
Fig. 2 is a flowchart illustrating a method for uploading contents according to an embodiment of the present disclosure;
Fig. 3 is a flowchart illustrating Embodiment One;
Fig. 4 is a flowchart illustrating Embodiment Two; and
Fig. 5 is a diagram illustrating a structure of a content delivery network according to an embodiment of the present disclosure.

### DETAILED DESCRIPTION

Since only QoS/QoE of service of contents provided by the service provider to the users is involved in the current content delivery network, rather than QoS/QoE of services needing to be uploaded in real time such as user-generated contents, while these services need QoS/QoE guarantee as well, the embodiment of the present disclosure therefore provides a technical solution capable of supporting user-generated content uploading. In the embodiment of the present disclosure, when needing to uplink contents, a user equipment sends a session request to a CDN control function entity through the IPTV service control function entity and/or service control function entity, so as to request for uploading the contents or uplinking a media stream. After receiving the session request, the CDN control function entity selects one or more CDN nodes to save the contents to be uploaded by the user equipment, and then sends the session request to a cluster control function entity of the selected one or more CDN nodes; the cluster control function entity which has received the session request selects a content delivery function entity of the CDN node where the cluster control function entity locates, and establishes a session for the contents uploaded or upstreamed by the user equipment between the cluster control function entity and the content delivery function entity. The user equipment uploads or upstreams the contents generated by it to the content delivery function entity through the session.

In the embodiment of the present disclosure, upstreaming is also called media stream. Uplinking means that the user equipment streams the contents to get a code stream and sends it to a content delivery function entity for caching or storing. Uploading the contents refers to uploading a media file to the content delivery function entity from the user equipment.

In the condition of no conflict, the embodiments and features in the present disclosure can be combined mutually.

The preferred embodiments of the present disclosure will be described hereinafter, with reference to the figures; it shall be understood that the preferred embodiments described here aim only to describe and explain the present disclosure, but not limit the present disclosure.

In order to well understand the technical solution provided by the embodiment of the present disclosure, an NGN-based IPTV system applied in the embodiment of the present disclosure will be introduced prior to the description of the technical solution.

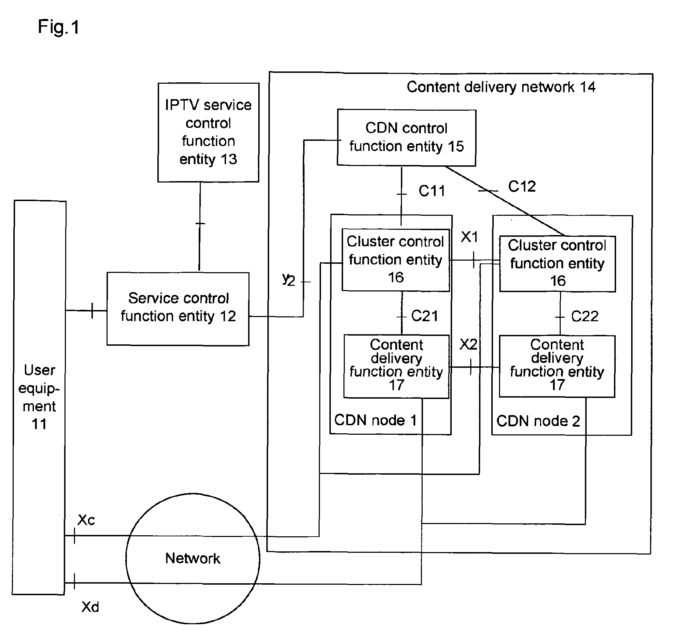

Fig. 1 is a diagram illustrating a structure of an NGN-based IPTV system according to an embodiment of the present disclosure. As shown in Fig. 1, the NGN-based IPTV system mainly comprises: a User Equipment (UE) 11, named as end-user function in ITU Telecommunication Standardization Sector (ITU-T); a Service Control Function entity (SCF) 12, being the core IMS in the NGN; an IPTV Service Control Function entity (IPTV SCF) 13, sometimes also named as IPTV Application Function entity (IPTVAF); a Content Delivery Network (CDN) 14, sometimes also named as content delivery and storage in the NGN. The CDN 14 may further comprise: a CDN (main) controller or a CDN control function entity (Content Delivery & Storage Control Functions /Content Delivery Network Control Functions/Content Distribution & Location Control Functions, CD&SCF/CDNCF/CD&LCF) 15, a Cluster Control Function entity (or Content Distribution & Delivery & Location control functions, CCF or CD&D&LCF for short) 16, and a Content Delivery Function entity (or Content Delivery and Storage Function, CDF or CD&SF) 17. A CDN node (1, 2...n) can comprises a cluster control function entity 16 and one or more content delivery function entities 17. In the specific application, the CDN node (called cluster as well) is not limited to CDN node 1 and CDN node 2 (as shown in the figure) but can be more nodes.

Each entity and each interface of the NGN-based IPTV system will be respectively described hereinafter.

UE 11, specifically, may be a mobile phone with mobile capability, a set top box of a fixed network, or a soft terminal realized on the basis of software for realizing the function of a set top box, and also comprises function entities such as a home gateway. The UE can realize IPTV services such as program on demand and live broadcasting through information interaction with the user.

SCF 12 is connected with UE 11 and mainly used for session control, service certification, authentication and charging as the aggregate of the main function entities of NGN service control layer. In the case of IMS network, the function entity is the core IMS. The core IMS is mainly used for providing an SIP-based session control mechanism, performing certification and authentication to an IPTV terminal user and requesting a resource and admission control subsystem to conduct resource allocation. The core IMS completes functions such as security, QoS, charging and roaming through interaction of SIP session with the IPTV terminal, IPTV application function entity and content delivery function entity.

IPTV SCF 13 is connected with SCF 12 through a Session Initiation Protocol (SIP), and is used for providing service authentication at the time of session initiation or modification. IPTV SCF 13 is provided with the following functions: checking user information and checking whether the user uses the selected contents legally; restricting and controlling the credit; selecting for the system an IPTV cluster control function entity 16 providing preliminary services; wherein the IPTV cluster control function entity mainly aims at IPTV services such as program on demand, live broadcasting, video recording and time-shifted broadcasting. IPTV SCF 13 is an IPTV SIP application server in the case of IMS network, corresponds to the aggregate of IPTV control and IPTV application in the Open IPTV Forum, or corresponds to IPTV application functions, application support functions and service support functions in the ITU-T.

CDN 14 is connected with the UE through interfaces Xc and Xd; wherein CDN 14 is connected with the UE through interface Xc to control the media stream according to the Real Time Streaming Protocol (RTSP), CDN 14 is connected with the UE through interface Xd to perform transmission and media downloading to the media stream RTP (via HyperText Transfer Protocol (HTTP)).

The CDN control function entity 15 completes the selection of the cluster control function entity 16. Generally, a CDN network is possibly provided with one or more CDN control function entities, among which the interaction is required to complete the selection of the cluster control function entity 16. The CDN control function entity 15 comprises location control functions and distribution control functions. The location control functions are responsible for locating the requested contents to a proper CDN node, and the distribution control functions are responsible for controlling content distribution (content injection, content scheduling and aging, etc.).

The cluster control function entity 16 represents UE to perform the message interaction with the content delivery function entity 17, maintains the status of the content delivery function entity 17 and processes the interaction with the content delivery function entity 17, and terminates the establishment of IPTV service session. The cluster control function entity 16 comprises location control functions, distribution control functions and content delivery functions. The location control functions are responsible for locating the requested contents to a proper content delivery function entity 17, and the distribution control functions are responsible for controlling content distribution (content injection, content scheduling and aging, etc.) to specific content delivery function entity 17. Content delivery functions are mainly responsible for controlling RTSP media stream.

The content delivery function entity 17 is responsible for media processing and delivery (unicast or multicast), and the content delivery and storage.

Interface C21/C22 (RTSP interface), through which the user cluster control function entity 16 performs media control to the content delivery function entity 17.

Interface C11/C12 (control interface) is realized through the SIP protocol, and the CDN control function entity 15 decides information of other CDN nodes capable of providing content uploading service; a CDN nodes can also report its service status information to the CDN control function entity 15 through this interface.

According to an embodiment of the present disclosure, the present disclosure firstly provides a method for uploading contents. The method is used for uploading user-equipment-generated contents to one or more CDN nodes of the content delivery network, or used for uplinking user-equipment-generated media stream to one or more CDN nodes of the content delivery network.

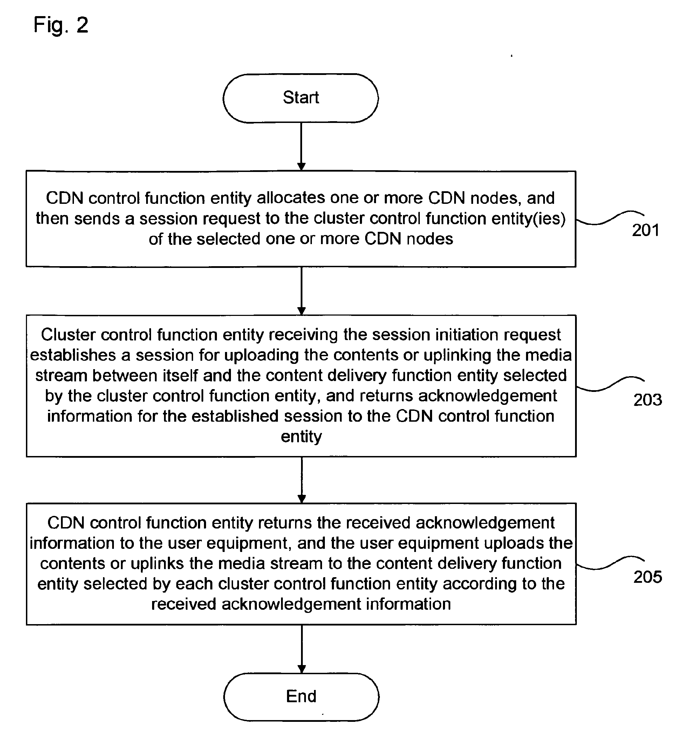

Fig. 2 is a flowchart illustrating a method for uplinking contents according to an embodiment of the present disclosure. As shown in Fig. 2, the method for uploading contents according to the embodiment of the present disclosure, mainly comprises the following steps (step S201-step S205):
step S201: after receiving a session initiation request for requesting to upload contents or uplink a media stream, the CDN control function entity allocates one or more CDN nodes, and then sends the session request to the cluster control function entity(ies) of the selected one or more CDN nodes;
step S203: the cluster control function entity receiving the session initiation request establishes a session for uploading the contents or uplinking the media stream between itself and the content delivery function entity selected by the cluster control function entity, and returns acknowledgement information for the established session to the CDN control function entity;
step S205: the CDN control function entity returns the received acknowledgement information to the user equipment, and the user equipment uploads the contents or uplinks the media stream to the content delivery function entity selected by each cluster control function entity according to the received acknowledgement information.

In the embodiment of the present disclosure, the session initiation request sent by the user equipment includes: a session initiation request for requesting to upload the contents (i.e. upload a media file) and a session initiation request for requesting to uplink the media stream (i.e. upstreaming, the UE sends the media stream to the CDN in an RTSP way). For the uplinking of these different contents, the embodiments of the present disclosure respectively provide specific technical solutions, which will be explained through specific embodiments hereinafter.

### Embodiment One

In this embodiment, the user equipment requests for uploading a media file, which can be realized in a way of FTP (File Transfer Protocol)/HTTP. In this embodiment, the cluster control function entity returns path information of the content delivery function entity which is used for saving the media file uploaded by the user equipment to the CDN control function entity, specifically, the path information may include: an IP address and port information of the content delivery function entity.

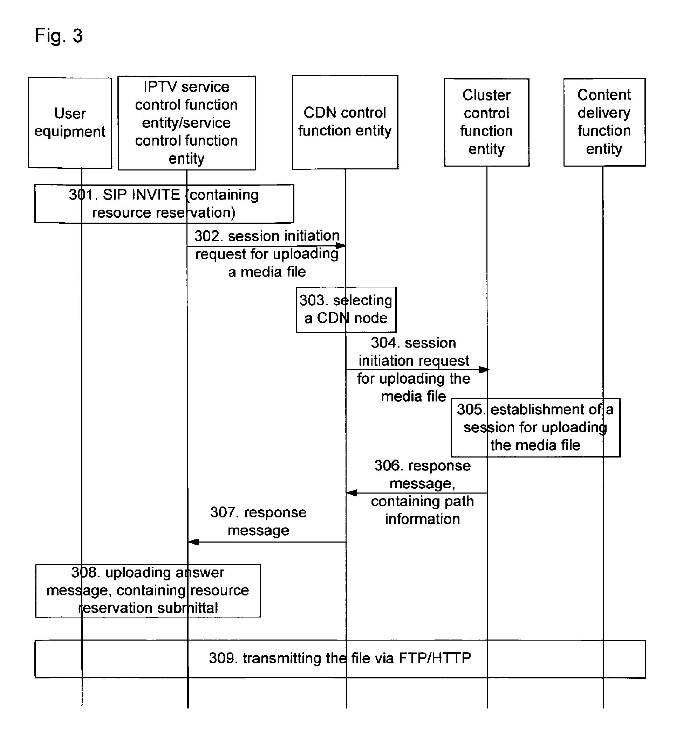

Fig. 3 is a flowchart illustrating the upload of the media file by the user equipment according to the embodiment. As shown in Fig. 3, the upload flow of the media file by the user equipment mainly comprises the following steps:
Step 301, the user equipment sends a session request (SIP INVITE) for uploading a media file upload to the service control function entity and/or IPTV service control function entity.

In the specific implementation process, the UE may upload the media file via FTP/HTTP, etc.

Specifically, during the process of implementing this step, the interaction among the UE, the IPTV service control function entity, the service control function entity, and the Resource and Admission Control Function entity (RACS or RACF) will be involved, wherein resource reservation operation will be involved between the service control function entity and the resource and admission control function entity.

Specifically, the session request may contain one or any combination of the following information items: identifier information of the uploaded contents, content description information and the size information of the media file, etc. Besides, in the condition that the core IMS conducts core controlling, the session request may adopt Session Initiation Protocol (SIP) to save the related information in Session Description Protocol (SDP) for sending.
Step 302, the IPTV service control function entity or service control function entity sends the session initiation request for uploading the media file to the CDN control function entity in the CDN.

In the specific implementation process, the session initiation request may contain information of a specific region to indicate the CDN control function entity to select CDN nodes in the specific region; or the session initiation request does not contain information of a specific region, i.e., not restricting the range of CDN nodes selected by the CDN control function entity.
Step 303, the CDN control function entity receiving the session initiation request for uploading the media file determines one or more CDN nodes for saving the media file (or called media contents) according to the load information of the CDN nodes managed by it and the condition whether the received session initiation request contains information on a specific region.

In this embodiment, the description will be made by taking CDN node 1 as an example. For the selection of more CDN nodes, the specific operation is similar to that for the selection of one CDN node.
Step 304, the CDN control function entity forwards the session initiation request for uploading the media file to the cluster control function entity of CDN node 1 selected by the CDN control function entity.
Step 305, the cluster control function entity selects a content delivery function entity of the CDN node where the cluster control function entity locates and establishes a session for uploading media file between itself and the content delivery function entity.

Specifically, the cluster control function entity may make selection of content delivery function entity according to the load condition of a content delivery function entity.

Specifically, the establishment of the session for uploading the media file between the cluster control function entity and the content delivery function entity may comprise the following steps:
step 1, the cluster control function entity sends a content uploading request to the content delivery function entity selected by it;
step 2, the content delivery function entity receives the content uploading request and sends a response message for content uploading to the cluster control function entity; wherein the response message contains acknowledgement information for uploading and path information through which the media file can be saved;
step 3, the cluster control function entity determines the information of resources required for uploading the media file according to the size of the media file contained in the session initiation request from the CDN control function entity, wherein the information of resources contains information on bandwidth required to be allocated.

In the specific implementation process, step 3 may be implemented in priority to step 1 and step 2.
Step 306, the cluster control function entity sends a response message to the CDN control function entity, the response message contains the path information about the content delivery function entity which is used for saving the media file uploaded by the user equipment, namely, the IP address and port, etc.; optionally, the response message may also contain the information on the bandwidth required for uploading the media file.
Step 307, the CDN control function entity forwards the information contained in the received response message to the IPTV service control function entity or service control function entity through a response message for media file uploading;
Step 308, the IPTV service control function entity or service control function entity returns that information to the UE through an uploading answer message. The implementation of operation of step 308 includes the operation of submitting resources such as bandwidth reserved by the service control function entity in step 301.
Step 309, the UE receiving the uploading answer message performs file transmission between itself and the corresponding content delivery function entity through FTP or HTTP according to the IP address and port information, etc., and uploads the media contents of the UE to the content delivery function entity.

### Embodiment Two

In this embodiment, the user equipment request for uplinking a media stream. In this embodiment, the cluster control function entity returns RTSP session identifier information to the CDN control function entity.

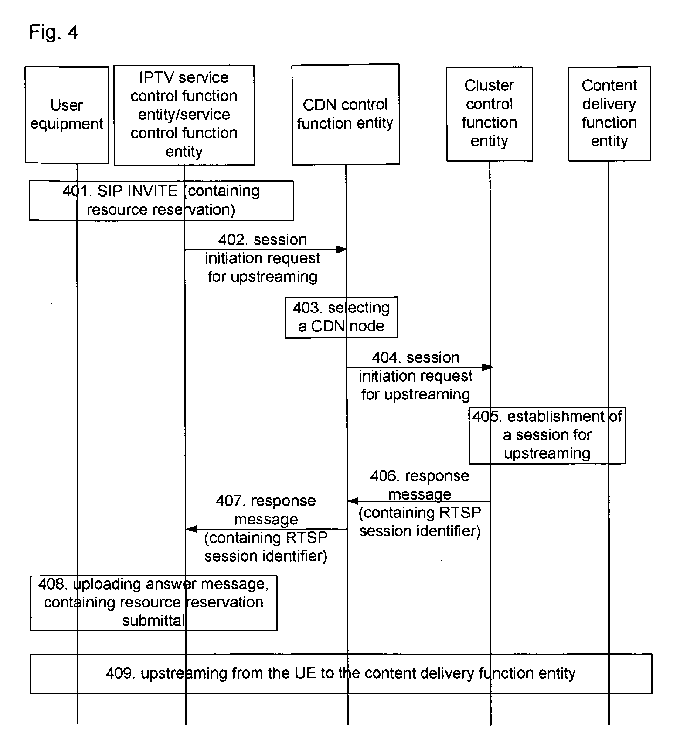

Fig. 4 is a flowchart illustrating the upstreaming (i.e., media stream uplinking) of the user equipment. As shown in Fig. 4, the upstreaming flow of the user equipment mainly comprises the following steps:
Step 401, the UE sends a session request (SIP INVITE) for upstreaming to the IPTV service control function entity/service control function entity.

The interaction among the UE, the IPTV service control function entity, the service control function entity, and the Resource and Admission Control Function entity (RACS or RACF) will be involved in this session request, wherein resource reservation operation will be involved between the service control function entity and the resource and admission control function entity.

Specifically, the session request may contain content identifier information of the upstreaming, content description information, and the size information of the code stream of the media contents, etc. In the condition that the core IMS conducts core controlling, the session request may adopt SIP to save the related information in SDP for sending.

Step 402, the IPTV service control function entity or service control function entity sends the session initiation request for upstreaming to the CDN control function entity.

Step 403, the CDN control function entity receiving the session initiation request for upstreaming determines one or more CDN nodes for saving the media stream uploaded by the UE according to the load information of the CDN nodes managed by it and the condition whether the requested SDP contains information on a specific region. In this embodiment, the description will be made by taking a selected CDN node as an example. For other selected CDN nodes, the operation is similar.

Step 404, the CDN control function entity forwards the session initiation request for upstreaming to the cluster control function entity of the CDN node selected by the CDN control function entity.

Step 405, the cluster control function entity selects a content delivery function entity, for example, according to the information on the load status of a content delivery function entity, and establishes a session for upstreaming between itself and the content delivery function entity.

Specifically, the establishment of the session between the cluster control function entity and content delivery function entity may comprise the following steps:
step 1, the cluster control function entity sends an upstreaming inquiry request (RTSP DESCRIBE message) to the content delivery function entity selected by it;
step 2, the content delivery function entity returns a response message to the cluster control function entity, wherein the response message may contain information on a media path through which the upstreaming is received, namely, the IP address and port information, etc.;
step 3, the cluster control function entity sends a media path setup message (RTSP SETUP) to the content delivery function entity;
step 4, the content delivery function entity receives the media path setup message and sends an acknowledgement message indicating a success of the media path setup to the cluster control function entity; the acknowledgement message contains RTSP session identifier information, i.e., RTSP Session ID;
step 5, the cluster control function entity determines the information of resources allocated for the upstreaming according to the information such as the size of code stream (for example, high definition and standard definition, etc.) contained in the received session initiation request for upstreaming, wherein the information of resources contains information on bandwidth required to be allocated, etc.

In the specific implementation process, step 5 may be implemented in priority to step 1, 2. 3 and 4.
Step 406, the cluster control function entity sends a response message to the CDN control function entity, and the response message contains the session identifier information of the set-up RTSP and resource information such as the bandwidth.
Step 407, the CDN control function entity forwards the information contained in the received response message to the IPTV service control function entity or service control function entity.
Step 408, the IPTV service control function entity or service control function entity returns the information received in step 407 to the UE, specifically it is returned to the UE through an upstreaming answer message.

The implementation of this step includes the operation of submitting resources such as bandwidth reserved by the service control function entity in step 401.
Step 409, upstreaming is uplinked from the UE to the content delivery function entity.

Specifically, the UE receiving the response message conducts the following steps according to the information contained in the message:
step 1, the UE sends an RTSP record request to the cluster control function entity to request for recording contents; the request contains the received RTSP session identifier;
step 2, the cluster control function entity requests the content delivery function entity for RTSP RECORD to request for recording contents;
step 3, the content delivery function entity sends an acknowledgement message to the cluster control function entity, namely, recording will be performed;
step 4, the cluster delivery function entity sends an acknowledgement message to the UE, namely, recording will be performed, and the upstreaming will be uplinked from the UE to the content delivery function entity.

Through the above method for uploading the contents provided by the embodiments of the present disclosure, the uploading of user-generated contents can be realized.

According to an embodiment of the present disclosure, the present disclosure also provides a content delivery network.

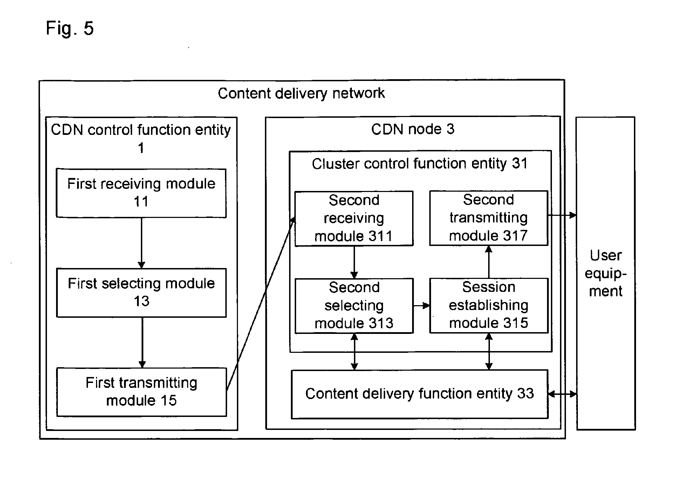

Fig. 5 is a diagram illustrating a structure of a content delivery network according to an embodiment of the present disclosure. As shown in Fig. 5, the content delivery network according to the embodiment of the present disclosure mainly comprises: a CDN control function entity 1 and one or more CDN nodes 3 (one CDN node is shown in the figure).

The above function entities will be described respectively hereinafter with reference to the attached figure.

As shown in Fig. 5, specifically, the CDN control function entity can comprises: a first receiving module 11, a first selecting module 13 and a first transmitting module 15. The first receiving module 11 is used for receiving a session initiation request for uploading contents or uplinking a media stream; the first selecting module 13 is connected with the first receiving module 11 and is used for allocating one or more CDN nodes according to load information of one or more CDN nodes 3 and/or region information contained in the session initiation request; the first transmitting module 15 is connected with the first receiving module 11 and is used for sending a session request to a cluster control function entity(ies) of one or more the CDN nodes allocated by the first selecting module 11.

Each CDN node 3 comprises: a cluster control function entity 31 and at least one content delivery function entity 33 (only one is shown in the figure for description convenience).

As shown in Fig. 5, the cluster control function entity 31 comprises: a second receiving module 311, a second selecting module 313, a session establishing module 315 and a second transmitting module 317. The second receiving module 311 is used for receiving the session request sent by the CDN control function entity 1; the second selecting module 313 is connected with the second receiving module 311 and is used for selecting a content delivery function entity according to the load status information of each content delivery function entity 33 in the CDN node where the cluster control function entity locates; the session establishing module 315 is connected with the second selecting module 313 and is used for establishing a session between the cluster control function entity and the content delivery function entity 33 selected by the second selecting module 313; the second transmitting module 317 is connected with the session establishing module 315 and is used for sending acknowledgement information that the session is established by the session establishing module 317 to the user equipment.

The content delivery function entity 33 is connected with the cluster control function entity 31 and user equipment, and is used for receiving the contents uploaded or the media stream uplinked by the user equipment.

As mentioned above, in virtue of the technical solution provided by the embodiments of the present disclosure, by means of that the CDN control function entity selects a CDN node for saving the data uploaded by the user equipment, and by means of establishing a session for uploading the data between a cluster control function entity and a content delivery function entity inside the CDN node, the user-equipment-generated contents can be uploaded to the content delivery function entity of the CDN node, so that the content delivery network in the next generation network can support user-generated contents, thus providing more new services for the users, improving the user experience and enhancing the competitiveness of the service provider.

The above description is only preferred embodiments of the present disclosure and is not used for restricting the present disclosure; for those skilled in the art, various modifications and changes can be made to the present disclosure. Any modifications, equivalent replacements and improvements, etc. within the principle of the present disclosure shall be included within the protection scope of the present disclosure.

## Claims

1. A method for uplinking contents, comprising:
after receiving a session initiation request for uploading contents or uplinking a media stream, allocating by a Content Delivery Network (CDN) control function entity one or more CDN nodes, and sending a session request to a cluster control function entity of the CDN node;
selecting, by the cluster control function entity which receives the session request, a content delivery function entity, establishing a session for uploading the contents or uplinking the media stream between itself and the selected content delivery function entity, and returning session acknowledgement information to the CDN control function entity; and
returning, by the CDN control function entity, the received acknowledgement information to a user equipment; uploading the contents or uplinking the media stream according to the acknowledgement information by the user equipment to each content delivery function entity selected by the cluster control function entity.

2. The method according to claim 1, further comprising: before the CDN control function entity receives the session initiation request,
sending by the user equipment a request message to a service control function entity or an IPTV service control function entity, so as to request to upload the contents or uplinking the media stream to the CDN;
sending, by the service control function entity or the IPTV service control function entity, the session initiation request to the CDN control function entity after receiving the request message.

3. The method according to claim 2, wherein the request message and the session initiation request each include one or any combination of the following items: content identifier information of the uploaded contents or the uplinked media stream, content description information, and size information of a code stream of the contents.

4. The method according to claim 1, wherein the CDN control function entity allocates one or more CDN nodes in the following way:
determining, by the CDN control function entity, one or more CDN nodes required to save the contents of the user equipment according to load information of each CDN node managed by the CDN control function entity and/or region information contained in the session initiation request.

5. The method according to claim 1, wherein the cluster control function entity selects a content delivery function entity according to load status information of each content delivery function entity in the CDN node where the cluster control function entity locates.

6. The method according to claim 1, wherein the operation of returning by the CDN control function entity the received acknowledgement information to the user equipment comprises:
sending, by the CDN control function entity, the acknowledgement information to an IPTV service control function entity or a service control function entity; and
sending, by the IPTV service control function entity or the service control function entity, the acknowledgement information to the user equipment.

7. The method according to any of claims 1 to 6, wherein when the session initiation request received by the CDN control function entity is a request for uploading the contents, the contents requested to be uploaded by the user equipment includes a media file, the acknowledgement information includes path information of the content delivery function entity which is used for saving the media file, wherein the path information includes an IP address and port information.

8. The method according to claim 7, wherein the operation that the cluster control function entity establishes the session for uploading the contents or uplinking the media stream between itself and the content delivery function entity selected by it comprises:
sending, by the cluster control function entity, a content uploading request to the content delivery function entity; and
receiving, by the content delivery function entity, the content uploading request, and sending a response message for content uploading to the cluster control function entity; wherein the response message contains acknowledgement information for content uploading and information on a path through which the media file can be saved.

9. The method according to claim 8, wherein the operation that the cluster control function entity establishes the session for uploading the contents or uplinking the media stream between itself and the content delivery function entity selected by it further comprises:
determining, by the cluster control function entity, resources allocated for uploading the media file according to a size of the media file contained in the received session initiation request which is uploaded by the user equipment.

10. The method according to claim 9, wherein the operation that the user equipment uploads the contents to each content delivery function entity according to the acknowledgement information comprises:
performing, by the user equipment, file transmission between itself and each content delivery function entity respectively according to the path information, to upload the media contents in the user equipment to each content delivery function entity.

11. The method according to any of claims 1 to 6, wherein the session initiation request received by the CDN control function entity is a request for uplinking the media stream, the contents of the media stream requested to be uplinked by the user equipment includes streamed media, the acknowledgement information includes a session identifier of a set-up RTSP.

12. The method according to claim 11, wherein the operation that the cluster control function entity establishes the session for uploading the contents or uplinking the media stream between itself and the content delivery function entity selected by it comprises:
sending, by the cluster control function entity, an inquiry request for media stream uplinking to the content delivery function entity;
receiving, by the content delivery function entity, the inquiry request, and sending a response message to the cluster control function entity, wherein the response message contains information on a media path through which the streamed media is received;
receiving, by the cluster control function entity, the response message, and sending a media path setup request to the content delivery function entity; and
receiving, by the content delivery function entity, the media path setup request and returns an acknowledgement message indicating a success of the media path setup to the cluster control function entity; wherein the acknowledgement message contains the RTSP session identifier.

13. The method according to claim 12, wherein the operation that the cluster control function entity establishes the session for uploading the contents or uplinking the media stream between itself and the content delivery function entity selected by it further comprises:
determining, by the cluster control function entity, resources allocated to uplink the media stream according to size information of a code stream of the uplinked media stream contained in the session initiation request.

14. The method according to claim 13, wherein the operation that the user equipment uploads the contents to each content delivery function entity according to the acknowledgement information comprises:
sending, by the user equipment, an RTSP request to the cluster control function entity according to the RTSP session identifier returned by the cluster control function entity, wherein the RTSP request contains the RTSP session identifier;
receiving, by the cluster control function entity, the RTSP request, and sending a stream control request to the content delivery function entity selected by the cluster control function entity;
sending, by the content delivery function entity, an acknowledgement message to the cluster control function entity; and
returning, by the cluster control function entity, the acknowledgement message to the user equipment; and uplinking by the user equipment the streamed media.

15. A content delivery network, comprising: a CDN control function entity and one or more CDN nodes; wherein
the CDN control function entity comprises:
a first receiving module, used for receiving a session initiation request for uploading contents or uplinking a media stream;
a first selecting module, used for allocating one or more CDN nodes according to load information of one or more CDN nodes and/or region information contained in the session initiation request;
a first transmitting module, used for sending a session request to a cluster control function entity of the CDN node allocated by the first selecting module; and
each CDN node comprises a cluster control function entity and at least one content delivery function entity, wherein
the cluster control function entity comprises:
a second receiving module, used for receiving the session request sent by the CDN control function entity;
a second selecting module, used for selecting a content delivery function entity according to load status information of each content delivery function entity in the CDN node where the cluster control function entity locates;
a session establishing module, used for establishing a session between the cluster control function entity and the content delivery function entity selected by the second selecting module;
a second transmitting module, used for sending attribute information of the session established by the session establishing module to a user equipment;
the content delivery function entity is used for receiving a media file uploaded or a media stream uplinked by the user equipment.

## Patentansprüche

1. Verfahren zum Aufwärtsübertragen von Inhalten, umfassend:
nach Empfangen einer Sitzungsstartanfrage zum Hochladen von Inhalten oder zum Aufwärtsübertragen eines Medien-Streams Zuweisen eines oder mehrerer Content-Delivery-Network-(CDN)Knotens durch eine CDN-Steuerfunktionseinheit und Senden einer Sitzungsanfrage an eine Cluster-Steuerfunktionseinheit des CDN-Knotens,
Auswählen einer Funktionseinheit zum Ausliefern von Inhalten (Content-Delivery-Funktionseinheit) durch die Cluster-Steuerfunktionseinheit, Herstellen einer Sitzung zum Hochladen der Inhalte oder zum Aufwärtsübertragen des Medien-Streams zwischen Letzterer und der ausgewählten Content-Delivery-Funktionseinheit und Zurücksenden von Sitzungsbestätigungsinformationen an die CDN-Steuerfunktionseinheit und
Zurücksenden der empfangenen Sitzungsbestätigungsinformationen an ein Nutzerendgerät durch die CDN-Steuerfunktionseinheit, Hochladen der Inhalte oder Aufwärtsübertragen des Medien-Streams gemäß den Bestätigungsinformationen durch das Nutzerendgerät auf jede von der Cluster-Steuerfunktionseinheit ausgewählte Content-Delivery-Funktionseinheit.

2. Verfahren nach Anspruch 1, ferner umfassend, bevor die CDN-Steuerfunktionseinheit die Sitzungsstartanfrage empfängt:
Senden einer Anfragenachricht durch das Nutzerendgerät an eine Dienststeuerfunktionseinheit oder eine IPTV-Dienststeuerfunktionseinheit, um das Hochladen der Inhalte oder Aufwärtsübertragen des Medien-Streams auf das CDN anzufragen,
Senden der Sitzungsstartanfrage an die CDN-Steuerfunktionseinheit durch die Dienststeuerfunktionseinheit oder die IPTV-Dienststeuerfunktionseinheit nach Empfang der Anfragenachricht.

3. Verfahren nach Anspruch 2, wobei die Anfragenachricht und die Sitzungsstartanfrage jeweils eines der Folgenden oder eine Kombination davon beinhalten: Inhaltskennungsinformationen der hochgeladenen Inhalte oder des aufwärtsübertragenen Medien-Streams, Inhaltbeschreibungsinformationen und Größeninformationen eines Code-Streams der Inhalte.

4. Verfahren nach Anspruch 1, wobei die CDN-Steuerfunktionseinheit auf folgende Weise einen oder mehrere CDN-Knoten zuweist:
Bestimmen eines oder mehrerer zum Speichern der Inhalte des Nutzerendgeräts erforderlicher CDN-Knoten durch die CDN-Steuerfunktionseinheit gemäß Lastinformationen jedes von der CDN-Steuerfunktionseinheit verwalteten CDN-Knotens und/oder Regionsinformationen, die in der Sitzungsstartanfrage enthalten sind.

5. Verfahren nach Anspruch 1, wobei die Cluster-Steuerfunktionseinheit eine Content-Delivery-Funktionseinheit gemäß Laststatusinformationen jeder ContentDelivery-Funktionseinheit in dem CDN-Knoten, in dem die Cluster-Steuerfunktionseinheit sitzt, auswählt.

6. Verfahren nach Anspruch 1, wobei der Vorgang des Zurücksendens der empfangenen Bestätigungsinformationen an das Nutzerendgerät durch die CDN-Steuerfunktionseinheit Folgendes umfasst:
Senden der Bestätigungsinformationen an eine IPTV-Dienststeuerfunktionseinheit oder die Dienststeuerfunktionseinheit durch die CDN-Steuerfunktionseinheit und
Senden der Bestätigungsinformationen an das Nutzerendgerät durch die IPTV-Dienststeuerfunktionseinheit oder die Dienststeuerfunktionseinheit.

7. Verfahren nach einem der Ansprüche 1 bis 6, wobei, wenn die durch die CDN-Steuerfunktionseinheit empfangene Sitzungsstartanfrage eine Anfrage zum Hochladen von Inhalten ist, wobei die vom Nutzerendgerät zum Hochladen angefragten Inhalte eine Mediendatei beinhalten und die Bestätigungsinformationen Pfadinformationen der zum Speichern der Mediendatei genutzten Content-Delivery-Funktionseinheit beinhalten, wobei die Pfadinformationen eine IP-Adresse und Port-Informationen beinhalten.

8. Verfahren nach Anspruch 7, wobei der Vorgang, dass die Cluster-Steuerfunktionseinheit die Sitzung zum Hochladen der Inhalte oder Aufwärtsübertragen des Medien-Streams zwischen sich und der von ihr ausgewählten Content-Delivery-Funktionseinheit herstellt, Folgendes umfasst:
Senden einer Inhaltshochladeanfrage an die Content-Delivery-Funktionseinheit durch die Cluster-Steuerfunktionseinheit und
Empfangen der Inhaltshochladeanfrage durch die Content-Delivery-Funktionseinheit und Senden einer Antwortnachricht zum Hochladen der Inhalte an die Cluster-Steuerfunktionseinheit, wobei die Antwortnachricht Bestätigungsinformationen zum Hochladen der Inhalte und Informationen zu einem Pfad, über den die Mediendatei gespeichert werden kann, enthält.

9. Verfahren nach Anspruch 8, wobei der Vorgang, dass die Cluster-Steuerfunktionseinheit die Sitzung zum Hochladen der Inhalte oder Aufwärtsübertragen des Medien-Streams zwischen sich und der von ihr ausgewählten Content-Delivery-Funktionseinheit herstellt, ferner Folgendes umfasst:
Bestimmen von Ressourcen, die zum Hochladen der Mediendatei zugewiesen werden, durch die Cluster-Steuerfunktionseinheit gemäß einer in der empfangenen Sitzungsstartanfrage enthaltenen Größe der durch das Nutzerendgerät hochgeladenen Mediendatei.

10. Verfahren nach Anspruch 9, wobei der Vorgang, dass das Nutzerendgerät die Inhalte gemäß den Bestätigungsinformationen auf jede Content-Delivery-Funktionseinheit hoch lädt, Folgendes umfasst:
Ausführen einer Dateiübertragung durch das Nutzerendgerät zwischen sich selbst und jeder Content-Delivery-Funktionseinheit, jeweils gemäß den Pfadinformationen, um die Medieninhalte in dem Nutzerendgerät auf jede ContentDelivery-Funktionseinheit hochzuladen.

11. Verfahren nach einem der Ansprüche 1 bis 6, wobei die durch die CDN-Steuerfunktionseinheit empfangene Sitzungsstartanfrage eine Anfrage zum Aufwärtsübertragen des Medien-Streams ist, die Inhalte des Media-Streams, deren Hochladen durch das Nutzerendgerät angefragt wird, gestreamte Medien beinhaltet und die Bestätigungsinformationen eine Sitzungskennung eines eingerichteten RTSP beinhalten.

12. Verfahren nach Anspruch 11, wobei der Vorgang, dass die Cluster-Steuerfunktionseinheit die Sitzung zum Hochladen der Inhalte oder Aufwärtsübertragen des Medien-Streams zwischen sich und der von ihr ausgewählten Content-Delivery-Funktionseinheit herstellt, Folgendes umfasst:
Senden einer Anforderungsanfrage zum Aufwärtsübertragen des Medien-Streams an die Content-Delivery-Funktionseinheit durch die Cluster-Steuerfunktionseinheit,
Empfangen der Anforderungsanfrage durch die Content-Delivery-Funktionseinheit und Senden einer Antwortnachricht an die Cluster-Steuerfunktionseinheit, wobei die Antwortnachricht Informationen zu einem Medienpfad enthält, über den die gestreamten Medien empfangen werden,
Empfangen der Antwortnachricht durch die Cluster-Steuerfunktionseinheit und Senden einer Medienpfad-Einrichtungsanfrage an die Content-Delivery-Funktionseinheit und
Empfangen der Medienpfad-Einrichtungsanfrage durch die Content-Delivery-Funktionseinheit und Zurücksenden einer Bestätigungsnachricht, die einen Erfolg der Medienpfad-Einrichtung angibt, an die Cluster-Steuerfunktionseinheit, wobei die Bestätigungsnachricht die RTSP-Sitzungskennung enthält.

13. Verfahren nach Anspruch 12, wobei der Vorgang, dass die Cluster-Steuerfunktionseinheit die Sitzung zum Hochladen der Inhalte oder Aufwärtsübertragen des Medien-Streams zwischen sich und der von ihr ausgewählten Content-Delivery-Funktionseinheit herstellt, ferner Folgendes umfasst:
Bestimmen von Ressourcen, die zum Aufwärtsübertragen des Medien-Streams zugewiesen werden, durch die Cluster-Steuerfunktionseinheit gemäß in der empfangenen Sitzungsstartanfrage enthaltenen Größeninformationen eines Code-Streams.

14. Verfahren nach Anspruch 13, wobei der Vorgang, dass das Nutzerendgerät die Inhalte gemäß den Bestätigungsinformationen auf jede Content-Delivery-Funktionseinheit hochlädt, Folgendes umfasst:
Senden einer RTSP-Anfrage durch das Nutzerendgerät an die Cluster-Steuerfunktionseinheit gemäß der von der Cluster-Steuerfunktionseinheit zurückgesendeten RTSP-Sitzungskennung, wobei die RTSP-Anfrage die RTSP-Sitzungskennung enthält,
Empfangen der RTSP-Anfrage durch die Cluster-Steuerfunktionseinheit und Senden einer Stream-Steueranfrage an die von der Cluster-Steuerfunktionseinheit ausgewählte Content-Delivery-Funktionseinheit,
Senden einer Bestätigungsnachricht an die Cluster-Steuerfunktionseinheit durch die Content-Delivery-Funktionseinheit und
Zurücksenden der Bestätigungsnachricht an das Nutzerendgerät durch die Cluster-Steuerfunktionseinheit und Aufwärtsübertragen der gestreamten Medien durch das Nutzerendgerät.

15. Content Delivery Network, umfassend: eine CDN-Steuerfunktionseinheit und einen oder mehrere CDN-Knoten, wobei
die CDN-Steuerfunktionseinheit Folgendes umfasst:
ein erstes Empfangsmodul zum Empfangen einer Sitzungsstartanfrage zum Hochladen von Inhalten oder Aufwärtsübertragen eines Medien-Streams,
ein erstes Auswahlmodul zum Zuweisen eines oder mehrerer CDN-Knoten gemäß Lastinformationen des einen oder der mehreren CDN-Knoten und/oder Regionsinformationen, die in der Sitzungsstartanfrage enthalten sind,
ein erstes Übertragungsmodul zum Senden einer Sitzungsanfrage an eine Cluster-Steuerfunktionseinheit des vom ersten Auswahlmodul zugewiesenen CDN-Knotens und
wobei jeder CDN-Knoten eine Cluster-Steuerfunktionseinheit und mindestens eine Content-Delivery-Funktionseinheit umfasst, wobei
die Cluster-Steuerfunktionseinheit Folgendes umfasst:
ein zweites Empfangsmodul zum Empfangen der durch die CDN-Steuerfunktionseinheit gesendeten Sitzungsanfrage,
ein zweites Auswahlmodul zum Auswählen einer Content-Delivery-Funktionseinheit gemäß Laststatusinformationen jeder Content-Delivery-Funktionseinheit in dem CDN-Knoten, in dem die Cluster-Steuerfunktionseinheit sitzt,
ein Sitzungsherstellungsmodul zum Herstellen einer Sitzung zwischen der Cluster-Steuerfunktionseinheit und der vom zweiten Auswahlmodul ausgewählten Content-Delivery-Funktionseinheit,
ein zweites Übertragungsmodul zum Senden von Attributinformationen der vom Sitzungsherstellungsmodul hergestellten Sitzung an ein Nutzerendgerät,
wobei die Content-Delivery-Funktionseinheit zum Empfangen einer vom Nutzerendgerät hochgeladenen Mediendatei oder eines vom Nutzerendgerät aufwärtsübertragenen Medien-Streams verwendet wird.

## Revendications

1. Procédé de transmission de contenus en liaison montante, comprenant les étapes ci-dessous consistant à :
suite à la réception d'une demande d'ouverture de session visant à télécharger des contenus en amont ou à transmettre en liaison montante un flux multimédia, affecter, par une entité de fonction de commande de réseau de distribution de contenu (CDN), un ou plusieurs noeuds de réseau CDN, et envoyer une demande de session à une entité de fonction de commande de grappe du noeud de réseau CDN ;
sélectionner, par le biais de l'entité de fonction de commande de grappe qui reçoit la demande de session, une entité de fonction de distribution de contenu, établir une session pour télécharger vers l'amont les contenus ou transmettre en liaison montante le flux multimédia, entre elle-même et l'entité de fonction de distribution de contenu sélectionnée, et renvoyer des informations d'accusé de réception de session à l'entité de fonction de commande de réseau CDN ; et
renvoyer, par le biais de l'entité de fonction de commande de réseau CDN, les informations d'accusé de réception reçues, à un équipement d'utilisateur ; télécharger vers l'amont les contenus ou transmettre en liaison montante le flux multimédia selon les informations d'accusé de réception, par le biais de l'équipement d'utilisateur, à chaque entité de fonction de distribution de contenu sélectionnée par l'entité de fonction de commande de grappe.

2. Procédé selon la revendication 1, comprenant en outre les étapes ci-dessous consistant à : avant que l'entité de fonction de commande de réseau CDN ne reçoive la demande d'ouverture de session :
envoyer, par le biais de l'équipement d'utilisateur, un message de demande, à une entité de fonction de commande de service ou à une entité de fonction de commande de service IPTV, de manière à demander le téléchargement vers l'amont des contenus ou la transmission en liaison montante du flux multimédia, au réseau CDN ;
envoyer, par le biais de l'entité de fonction de commande de service ou de l'entité de fonction de commande de service IPTV, la demande d'ouverture de session, à l'entité de fonction de commande de réseau CDN, suite à la réception du message de demande.

3. Procédé selon la revendication 2, dans lequel le message de demande et la demande d'ouverture de session incluent chacun l'un ou toute combinaison des éléments suivants : des informations d'identifiant de contenu des contenus téléchargés vers l'amont ou du flux multimédia transmis en liaison montante, des informations de description de contenu, et des informations de taille d'un flux de codes des contenus.

4. Procédé selon la revendication 1, dans lequel l'entité de fonction de commande de réseau CDN affecte un ou plusieurs noeuds de réseau CDN de la manière suivante consistant à :
déterminer, par le biais de l'entité de fonction de commande de réseau CDN, un ou plusieurs noeuds de réseau CDN requis en vue d'enregistrer les contenus de l'équipement d'utilisateur selon des informations de charge de chaque noeud de réseau CDN géré par l'entité de fonction de commande de réseau CDN, et/ou des informations de zone contenues dans la demande d'ouverture de session.

5. Procédé selon la revendication 1, dans lequel l'entité de fonction de commande de grappe sélectionne une entité de fonction de distribution de contenu selon des informations d'état de charge de chaque entité de fonction de distribution de contenu dans le noeud de réseau CDN où l'entité de fonction de commande de grappe est localisée.

6. Procédé selon la revendication 1, dans lequel l'opération de renvoi, par l'entité de fonction de commande de réseau CDN, des informations d'accusé de réception reçues, à l'équipement d'utilisateur, comprend les étapes ci-dessous consistant à :
envoyer, par le biais de l'entité de fonction de commande de réseau CDN, les informations d'accusé de réception, à une entité de fonction de commande de service IPTV ou à une entité de fonction de commande de service ; et
envoyer, par le biais de l'entité de fonction de commande de service IPTV ou de l'entité de fonction de commande de service, les informations d'accusé de réception, à l'équipement d'utilisateur.

7. Procédé selon l'une quelconque des revendications 1 à 6, dans lequel, lorsque la demande d'ouverture de session reçue par l'entité de fonction de commande de réseau CDN correspond à une demande de téléchargement vers l'amont des contenus, les contenus demandés devant être téléchargés vers l'amont par l'équipement d'utilisateur incluent un fichier multimédia, les informations d'accusé de réception incluent des informations de chemin de l'entité de fonction de distribution de contenu qui sont utilisées en vue d'enregistrer le fichier multimédia, dans lequel les informations de chemin incluent des informations de port et d'adresse IP.

8. Procédé selon la revendication 7, dans lequel l'opération dans laquelle l'entité de fonction de commande de grappe établit la session visant à télécharger vers l'amont les contenus ou transmettre en liaison montante le flux multimédia entre elle-même et l'entité de fonction de distribution de contenu sélectionnée par celle-ci, comprend les étapes ci-dessous consistant à :
envoyer, par le biais de l'entité de fonction de commande de grappe, une demande de téléchargement vers l'amont de contenu, à l'entité de fonction de distribution de contenu ; et
recevoir, par le biais de l'entité de fonction de distribution de contenu, la demande de téléchargement vers l'amont de contenu, et envoyer un message de réponse pour le téléchargement vers l'amont de contenu, à l'entité de fonction de commande de grappe ; dans lequel le message de réponse contient des informations d'accusé de réception pour le téléchargement vers l'amont de contenu et des informations sur un chemin à travers lequel le fichier multimédia peut être enregistré.

9. Procédé selon la revendication 8, dans lequel l'opération au cours de laquelle l'entité de fonction de commande de grappe établit la session pour télécharger vers l'amont les contenus ou transmettre en liaison montante le flux multimédia entre elle-même et l'entité de fonction de distribution de contenu sélectionnée par celle-ci, comprend en outre l'étape ci-dessous consistant à :
déterminer, par le biais de l'entité de fonction de commande de grappe, des ressources affectées en vue de télécharger vers l'amont le fichier multimédia selon une taille du fichier multimédia contenue dans la demande d'ouverture de session reçue, lesquelles sont téléchargées vers l'amont par l'équipement d'utilisateur.

10. Procédé selon la revendication 9, dans lequel l'opération au cours de laquelle l'équipement d'utilisateur télécharge les contenus vers l'amont vers chaque entité de fonction de distribution de contenu selon les informations d'accusé de réception, comprend l'étape ci-dessous consistant à :
mettre en oeuvre, par le biais de l'équipement d'utilisateur, une transmission de fichier, entre lui-même et chaque entité de fonction de distribution de contenu, respectivement, selon les informations de chemin, en vue de télécharger vers l'amont les contenus multimédias dans l'équipement d'utilisateur vers chaque entité de fonction de distribution de contenu.

11. Procédé selon l'une quelconque des revendications 1 à 6, dans lequel la demande d'ouverture de session reçue par l'entité de fonction de commande de réseau CDN est une demande visant à transmettre en liaison montante le flux multimédia, dans lequel les contenus du flux multimédia dont la transmission est requise en liaison montante par l'équipement d'utilisateur incluent un média diffusé en continu, et dans lequel les informations d'accusé de réception incluent un identifiant de session d'un protocole RTSP d'établissement.

12. Procédé selon la revendication 11, dans lequel l'opération au cours de laquelle l'entité de fonction de commande de grappe établit la session visant à télécharger vers l'amont les contenus ou à transmettre en liaison montante le flux multimédia entre elle-même et l'entité de fonction de distribution de contenu sélectionnée par celle-ci, comprend les étapes ci-dessous consistant à :
envoyer, par le biais de l'entité de fonction de commande de grappe, une demande d'interrogation pour une transmission de flux multimédia en liaison montante, à l'entité de fonction de distribution de contenu ;
recevoir, par le biais de l'entité de fonction de distribution de contenu, la demande d'interrogation, et envoyer un message de réponse à l'entité de fonction de commande de grappe, dans lequel le message de réponse contient des informations sur un chemin multimédia à travers lequel le média diffusé en continu est reçu ;
recevoir, par le biais de l'entité de fonction de commande de grappe, le message de réponse, et envoyer une demande d'établissement de chemin multimédia à l'entité de fonction de distribution de contenu ; et
recevoir, par le biais de l'entité de fonction de distribution de contenu, la demande d'établissement de chemin multimédia, et renvoyer un message d'accusé de réception indiquant la réussite de l'établissement de chemin multimédia à l'entité de fonction de commande de grappe ; dans lequel le message d'accusé de réception contient l'identifiant de session de protocole RTSP.

13. Procédé selon la revendication 12, dans lequel l'opération au cours de laquelle l'entité de fonction de commande de grappe établit la session visant à télécharger vers l'amont les contenus ou à transmettre en liaison montante le flux multimédia entre elle-même et l'entité de fonction de distribution de contenu sélectionnée par celle-ci, comprend en outre l'étape ci-dessous consistant à :
déterminer, par le biais de l'entité de fonction de commande de grappe, des ressources affectées en vue de transmettre en liaison montante le flux multimédia selon des informations de taille, d'un flux de codes du flux multimédia transmis en liaison montante, contenues dans la demande d'ouverture de session.

14. Procédé selon la revendication 13, dans lequel l'opération au cours de laquelle l'équipement d'utilisateur télécharge les contenus vers l'amont vers chaque entité de fonction de distribution de contenu selon les informations d'accusé de réception comprend les étapes ci-dessous consistant à :
envoyer, par le biais de l'équipement d'utilisateur, une demande de protocole RTSP, à l'entité de fonction de commande de grappe, selon l'identifiant de session de protocole RTSP renvoyé par l'entité de fonction de commande de grappe, dans lequel la demande de protocole RTSP contient l'identifiant de session de protocole RTSP ;
recevoir, par le biais de l'entité de fonction de commande de grappe, la demande de protocole RTSP, et envoyer une demande de commande de flux à l'entité de fonction de distribution de contenu sélectionnée par l'entité de fonction de commande de grappe ;
envoyer, par le biais de l'entité de fonction de distribution de contenu, un message d'accusé de réception, à l'entité de fonction de commande de grappe ; et
renvoyer, par le biais de l'entité de fonction de commande de grappe, le message d'accusé de réception, à l'équipement d'utilisateur ; et transmettre en liaison montante, par le biais de l'équipement d'utilisateur, le média diffusé en continu.

15. Réseau de distribution de contenu, comprenant : une entité de fonction de commande de réseau CDN et un ou plusieurs noeuds de réseau CDN ; dans lequel
l'entité de fonction de commande de réseau CDN comprend :
un premier module de réception, utilisé pour recevoir une demande d'ouverture de session visant à télécharger des contenus en amont ou à transmettre en liaison montante un flux multimédia ;
un premier module de sélection, utilisé pour affecter un ou plusieurs noeuds de réseau CDN selon des informations de charge d'un ou plusieurs noeuds de réseau CDN et/ou des informations de zone contenues dans la demande d'ouverture de session ;
un premier module de transmission, utilisé pour envoyer une demande de session à une entité de fonction de commande de grappe du noeud de réseau CDN affecté par le premier module de sélection ; et
chaque noeud de réseau CDN comporte une entité de fonction de commande de grappe et au moins une entité de fonction de distribution de contenu, dans lequel
l'entité de fonction de commande de grappe comprend :
un second module de réception, utilisé pour recevoir la demande de session envoyée par le biais de l'entité de fonction de commande de réseau CDN ;
un second module de sélection, utilisé pour sélectionner une entité de fonction de distribution de contenu selon des informations d'état de charge de chaque entité de fonction de distribution de contenu dans le noeud de réseau CDN où l'entité de fonction de commande de grappe est localisée ;
un module d'établissement de session, utilisé pour établir une session entre l'entité de fonction de commande de grappe et l'entité de fonction de distribution de contenu sélectionnée par le second module de sélection ;
un second module de transmission, utilisé pour envoyer des informations d'attribut de la session établie par le module d'établissement de session, à un équipement d'utilisateur ;
l'entité de fonction de distribution de contenu étant utilisée pour recevoir un fichier multimédia téléchargé vers l'amont ou un flux multimédia transmis en liaison montante par l'équipement d'utilisateur.
